Europäisches Patentamt

European Patent Office

Office européen des brevets

(19)

(11) Veröffentlichungsnummer: **0 247 026**
**A2**

(12) **EUROPÄISCHE PATENTANMELDUNG**

(21) Anmeldenummer: **87890101.6**

(22) Anmeldetag: **15.05.87**

(51) Int. Cl.⁴: **H 04 J 3/06**

(30) Priorität: **16.05.86 AT 1312/86**

(43) Veröffentlichungstag der Anmeldung:
**25.11.87  Patentblatt  87/48**

(84) Benannte Vertragsstaaten: **DE FR GB**

(71) Anmelder: **AUSTRIA MIKROSYSTEME INTERNATIONAL GMBH**
**Muldenstrasse 5**
**A-4020 Linz  (AT)**

(72) Erfinder: **Kopetz, Hermann, Dr.**
**Gusshausstrasse 30**
**A-1040 Wien  (AT)**

(74) Vertreter: **Matschnig, Franz, Dipl.-Ing.**
**Siebensterngasse 54 Postfach 452**
**A-1071 Wien  (AT)**

(54) Verfahren zur Synchronisation der Echtzeituhren von an ein Kommunikationsmedium angeschlossenen Knotenrechnern und Knotenrechner zur Durchführung des Verfahrens.

(57) Bei diesem Verfahren zur Synchronisation der Echtzeituhren von an ein Kommunikationsmedium angeschlossenen Knotenrechnern in lokalen Netzwerken, sendet ein Knotenrechner nach Vorliegen der Zugriffsberechtigung an das Kommunikationsmedium eine Nachricht aus, die einen der lokalen Uhrzeit entsprechenden Zeitstempel trägt.

Um die Leseunschärfe herabzusetzen, die unter anderem durch die Variabilität der Zeit vom Ablesen der Uhr bis zum Senden der Nachricht bedingt ist, wird der Zeitstempel erst dann erstellt und in die Nachricht eingebettet, wenn der Knotenrechner mit der Sendung der Nachricht begonnen hat.

EP 0 247 026 A2

**Beschreibung**

Verfahren zur Synchronisation der Echtzeituhren von an ein Kommunikationsmedium angeschlossenen Knotenrechnern und Knotenrechner zur Durchführung des Verfahrens.

Verteilte Rechnersysteme bestehen aus einer Anzahl von autonomen Rechnern (Knotenrechnern), die über ein lokales Netzwerk (Kommunikationsmedium) miteinander lose verbunden sind. Das Kommunikationsmedium kann Bus/Baum oder Ring-Topologie aufweisen, wobei verschiedene Methoden des Zugriffs der Knotenrechner an das Netzwerk bekannt geworden sind. Protokolle legen die Kommunikation zwischen den einzelnen Knotenrechnern über das Netzwerk fest. Eine ausführliche Darstellung dieses Problemkreises findet sich in Stallings W., "Local Networks", Computing Surveys, Vol. 16, No.1, March 1984, p.3-41.

Es entspricht dem Stand der Technik, daß jeder Knotenrechner über eine eigene Echtzeithur verfügt. Die Ganggenauigkeit dieser Uhren liegt im Bereich der Ganggenauigkeit von Quarzuhren, d.h. der relative Fehler liegt bei 10**-6.

Wenn nun eine Echtzeitanwendung, z.B. ein technischer Prozeß, von einem verteilten Echtzeitsystem gesteuert wird, ist es erforderlich, die Echtzeituhren innerhalb der einzelnen Knotenrechner zu synchronisieren. Die Genauigkeit der Synchronisation legt die Zeitintervalle fest, die vom System noch aufgelöst werden können. Ungenauigkeiten der Synchronisation können zu Informationsverlust und oft zum Zusammenbruch des gesamten Systems führen. In manchen Fällen, z.B. bei der landesweiten Lastverteilung elektrischer Energie, können solche Ungenauigkeiten tatsächlich katastrophale Folgen haben.

Die Synchronisation der Uhren erfolgt in einem verteilten Echtzeitsystem über den Austausch von Nachrichten, wodurch eigene Kanäle bzw. Leitungen für die Synchronisation eingespart werden. Nach Möglichkeit soll das Synchronisationsverfahren fehlertolerant sein, d.h. eine fehlerhafte Uhr soll als solche erkannt und in dem Synchronisationsverfahren nicht weiter berücksichtigt werden. Ebenfalls soll der Verlust von einzelnen Nachrichten toleriert werden. Jener Teil der ausgesendeten bzw. empfangenen Nachricht, der die Information über den Stand der lokalen Echtzeituhr beinhaltet, wird Zeitstempel genannt und weist typisch eine Länge von 2 bis 4 Byte auf.

In den vergangenen Jahren sind einige Algorithmen zur fehlertoleranten Synchronisation der Echtzeituhren in über Nachrichten gekoppelten verteilten Computersystemen veröffentlicht worden. Im Rahmen des Foschungsprojektes SIFT (J.H. Wensley et al. "SIFT: The Design and Analysis of a Fault Tolerant System for Aircraft Control", Proceedings of the IEEE Vol 66, No. 10, p. 1240-1255, October 1978) wurde ein Prototyp eines über Nachrichten synchronisierten, verteilten, hochzuverlässigen Computersystems gebaut. Als Knotenrechner wurden am Markt verfügbare Minicomputer verwendet. Der Synchronisationsalgorithmus wurde in der (einzigen) CPU dieser Knotenrechner parallel zu der Anwendungssoftware ausgeführt.

Aus der genannten Arbeit geht hervor, daß der Rechenaufwand mit der Anzahl der Knotenrechner in einem Netzwerk und der Anzahl der tolerierten Fehler stark zunimmt und die zentrale Recheneinheit der Knotenrechner dann untragbar belastet. Eine wesentliche Verbesserung in dieser Hinsicht ergibt das Rechensystem nach der AT-PS 382.253 (A 2030/84), welches eine autonome Synchronisierungseinheit schafft und zu einer Entflechtung der Aufgaben im Knotenrechner und damit zu einer Reduzierung der Softwarekomplexität führt.

Damit die Zeitbestimmung eines systemglobalen Ereignisses auf einen Uhrentick genau bestimmbar ist, muß gelten:

$$g > \Delta$$

worin:

$g$... Granularität, Auflösung, das ist der Abstand zwischen zwei Ticks, und

$\Delta$... maximale Abweichung zwischen zwei Uhren des Systems.

Um eine genügend kleine Granularität zu erhalten, muß somit $\Delta$ so klein als möglich gehalten werden.

Die Abweichung $\Delta$ läßt sich berechnen, sie kann z.B. für den sogenannten "fehlertoleranten Durchschnittsalgorithmus" dargestell werden, als:

$$\Delta = ( \varepsilon + \xi ) \cdot \frac{N - 2k}{N - 3k}$$

worin:

$\varepsilon$ ... Leseunschärfe

$\xi$ ... maximale Abweichung zweier Uhren während des Synchronisationsintervalles

$N$... Anzahl der Uhren des Systems

$k$... Anzahl der "falschen" Uhren

Für Synchronisationsintervalle mit einer Länge von z.B. 1s ist typisch $\xi \sim 5\mu s$ wogegen $\varepsilon$ je nach Art des Systems bzw. Protokolls zwischen typisch 1ms und 10ms liegt.

Die Leseunschärfe $\varepsilon$ wird durch drei Faktoren bestimmt, nämlich durch:

a) die Variabilität der Zeit vom Ablesen der Uhr (Erstellung des Zeitstempels) bis zum Senden der Nachricht

b) die Variabilität der Zeit des Nachrichtentransportes

c) Die Variabilität der Zeit vom Eintreffen der Nachricht beim Empfänger bis zum Ablesen der Uhr.

Die unter a) genannte Variabilität wird dadurch hervorgerufen, daß einerseits der Knotenrechner nicht zu beliebigen Zeitpunkten senden darf, sondern warten muß, bis eine Zugriffsberechtigung zu dem Kommunikationsmedium vorliegt und daß andererseits wegen des komplexen Aufbaues der Kommunikationseinheit eine beträchtliche Zeitspanne vergehen kann, bis nach Aufforderung durch die Zentraleinheit des Knotenrechners tatsächlich gesendet wird.

Die Erfindung hat es sich zur Aufgabe gemacht, die Leseunschärfe durch Verringerung der oben unter a) genannten Variabilität wesentlich herabzusetzen.

Dieses Ziel läßt sich mit einem Verfahren der eingangs genannten Art erreichen, bei welchem erfindungsgemäß der Zeitstempel erst dann erstellt und in die Nachricht eingebettet wird, wenn der Knotenrechner mit der Sendung der Nachricht begonnen hat.

Dank dem erfindungsgemäßen Verfahren wird sichergestellt, daß der ausgelesene Zeitstempel der Nachricht immer "aktuell" ist. Je nach Art des Netzwerkes und des verwendeten Protokolls läßt sich hiedurch die Granularität um ein bis zwei Größenordnungen herabsetzen. Demgegenüber war der Zeitstempel nach dem Stand der Technik bereits zu einem Zeitpunkt festgelegt, zu dem der tatsächliche Sendezeitpunkt noch ungewiß war.

Eine vorteilhafte Weiterbildung dieses Verfahrens zeichnet sich dadurch aus, daß nach Vorliegen eines Befehls der Zentraleinheit des Knotenrechners dessen Kommunikationseinheit über direkten Speicherzugriff den Beginn der Nachricht aus dem Speicher des Knotenrechners liest und in einem internen FIFO-Speicher ablegt, hierauf die Zugriffsberechtigung zum Kommunikationsmedium überprüft und bei Vorliegen derselben mit der Sendung der Nachricht aus dem FIFO-Speicher begonnen wird und hierauf der Zeitstempel erstellt und über den FIFO-Speicher in die Nachricht eingebettet wird.

Zweckmäßig ist es hiebei, wenn die Nachrichtenlänge größer als die Speicherkapazität des FIFO-Speichers gewählt wird, da hiedurch ohne besondere Maßnahmen das vorzeitige Ablegen und "altern" des Zeitstempels vermieden werden kann.

Die Ungenauigkeiten der internen Taktgeber kommen am wenigsten zum Tragen, falls der Zeitstempel im Bereich des Nachrichtenendes in die Nachricht eingebettet wird.

Ein Knotenrechner zur Durchführung des erfindungsgemäßen Verfahrens, der eine Zentraleinheit, eine lokale Echtzeituhr, eine Synchronisierungseinheit, eine Kommunikationseinheit und einen Speicher enthält, ist dadurch gekennzeichnet, daß die über eine DMA-Einheit direkten Zugriff zum Speicher besitzende Kommunikationseinheit einen FIFO-Speicher enthält, dessen Speicherkapazität kleiner als die Nachrichtenlänge ist, wobei die Kommunikationseinheit nach Vorliegen eines Sendebefehls der Zentraleinheit zum Einlesen eines ersten Nachrichtenteiles in den FIFO-Speicher, zum darauffolgenden Überprüfen der Zugriffsberechtigung an das Kommunikationsmedium, nach Vorliegen derselben zum Auslesen des FIFO-Speichers an das Kommunikationsmedium und zum weiteren Übertragen der Nachricht aus dem Speicher in den FIFO-Speicher sowie an einer vorbestimmten Stelle der Nachricht zum Einlesen eines in der Synchronisierungseinheit erstellten Zeitstempels in den FIFO-Speicher eingerichtet ist.

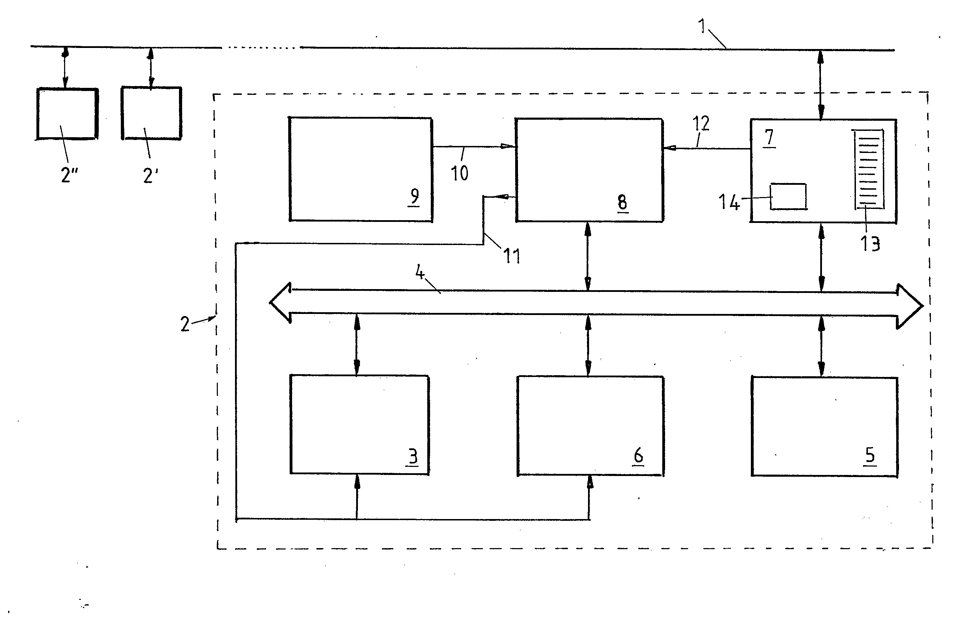

Die Erfindung samt ihren weiteren Vorteilen und Merkmalen ist im folgenden an Hand eines Ausführungsbeispieles näher erläutert, das in der Zeichnung dargestellt ist. Diese zeigt das Schema eines Knotenrechners, der lose an ein Kommunikationsmedium gekoppelt ist.

An ein Kommunikationsmedium 1, ist eine Anzahl von Knotenrechnern 2, 2', 2'', angeschlossen, wobei nur ein Rechner im näheren Detail gezeigt ist. Die Busleitung kann beispielsweise innerhalb eines Gebäudes mehrere Rechner miteinander verbinden. Im allgemeinen versteht man unter lokalen Netzwerken Systeme mit hohen Datenübertragungsgeschwindigkeiten (0,1 bis 100 Mbps, kurzen Entfernungen (100m bis 50km) und niedrigen Fehlerraten ($10^{-9}$ bis $10^{-11}$). Der Zugriff der einzelnen Knotenrechner kann beispielsweise im Zeitvielfachzugriff (TDMA), im Token-Verfahren oder in einem CSMA (carrier sense multiple access) -Verfahren erfolgen.

Ein Knotenrechner 2 besteht beispielsweise aus einer Zentraleinheit 3, die über einen internen Bus 4 mit einem Speicher 5, Eingabe/Ausgabe Subsystemen 6, einer Kommuniktationseinheit 7 und einer Synchronisierungseinheit 8 in Verbindung steht. Der Ausgang eines lokalen Taktgebers 9 ist über eine Leitung 10 direkt mit dem Interrupteingang der Synchronisierungseinheit verbunden, wobei die synchronisierten lokalen Zeitimpulse über eine Signalleitung 11 für die globale Zeit an die Subsysteme 6 und z.B. den Interrupteingang der Zentraleinheit 3 weitergeleitet werden. Für die direkte Mitteilung des Empfangszeitpunktes einer Nachricht von der Kommunikationseinhiet 7 an die Synchronisierungseinheit 8 ist eine weitere Signalleitung 12 vorgesehen.

Es sei jedoch an dieser Stelle angemerkt, daß die Synchronisierungseinheit 8 nicht notwendigerweise ein eigenes physisches Gebilde darstellen muß, sondern in der Zentraleinheit oder in der Kommunikationseinheit enthalten sein kann.

Die Kommunikationseinheit 7 enthält einen FIFO-Speicher 13. Ein solcher "First-in, first-out" Speicher hat die Eigenschaft, daß die Daten in der gleichen Reihenfolge ausgelesen werden, in der sie eingeschrieben wurden. Weiters ist in der Kommunikationseinheit eine DMA-Einheit 14 enthalten, die einen direkten Speicherzugriff (direct memory access) ermöglicht.

Wenn der Knotenrechner 2 eine Nachricht an einen weiteren, gleichfalls mit dem Kommunikationsmedium 1 lose verbundenen Knotenrechner senden soll, wird ein Befehl von der Zentraleinheit 3 über den internen Bus 4 an die Kommunikationseinheit 7 übermittelt, der den eigentlichen Sendebefehl und Angaben über im Speicher enthaltene, zu sendende Informationen beinhaltet.

Daraufhin entnimmt die Kommunikationseinheit über den direkten Speicherzugriff 13 den Beginn der zu sendenden Nachricht aus dem Speicher 5 und legt diesen Nachrichtenteil in den FIFO-Speicher 13 ab. Die Kommunikationseinheit 7 überprüft nun ihre Zugriffsberechtigung zum Medium 1. Sobald diese vorliegt, wird die Nachricht, d.h. zunächst deren Beginn, aus dem FIFO-Speicher 13 heraus gesendet. Die Kommunikationseinheit 7 ist dabei so eingerichtet, daß sie bei einem bestimmten Entleerungsgrad des FIFO-Speichers 13 den Transfer weiterer Nachrichtenteile aus dem Speicher 5 in den FIFO-Speicher 13 veranlaßt.

Nach dem Beginn des Aussendens der Nachricht wird über einen entsprechenden Befehl an die Synchronisierungseinheit 8 von dieser ein Zeitstempel erstellt und im Zuge des weiteren Auffüllens des FIFO-Speichers 13 in die Nachricht eingebettet. Um zusätzliche Ungenauigkeiten durch interne Taktgeber gering zu halten, sollte der Zeitstempel möglichst im Bereich des Nachrichtenendes stehen.

Es ist weiters veständlich, daß der Zeitstempel erst an einer Stelle der Nachricht stehen darf, die weiter vom Nachrichtenbeginn entfernt ist, als die Speicherkapazität des FIFO-Speichers 13 beträgt. Anderenfalls würde der Zeitstempel noch vor Sendebeginn mit dem ersten Nachrichtenteil im FIFO-Speicher 13 abgelegt werden und dort eine unbestimmte Zeit liegen, bevor er abgesendet wird. Wenn beispielsweise der FIFO-Speicher 13 eine Kapazität von 128 Byte besitzt, muß durch entsprechende Programmierung dafür Sorge getragen werden, daß der Zeitstempel frühestens ab dem 129 Byte der Nachrichtenlänge in die Nachricht eingeblendet wird.

**Patentansprüche**

1. Verfahren zur Synchronisation der Echtzeituhren von an ein Kommunikationsmedium angeschlossenen Knotenrechnern in lokalen Netzwerken, bei welchem ein Knotenrechner nach Vorliegen der Zugriffsberechtigung an das Kommunikationsmedium eine Nachricht aussendet, die einen der lokalen Uhrzeit entsprechenden Zeitstempel trägt, dadurch gekennzeichnet, daß der Zeitstempel erst dann erstellt und in die Nachricht eingebettet wird, wenn der Knotenrechner mit der Sendung der Nachricht begonnen hat.

2. Verfahren nach Anspruch 1, dadurch gekennzeichnet, daß nach Vorliegen eines Befehls der Zentraleinheit des Knotenrechners dessen Kommunikationseinheit über direkten Speicherzugriff den Beginn der Nachricht aus dem Speicher des Knotenrechners liest und in einem internen FIFO-Speicher ablegt, hierauf die Zugriffsberechtigung zum Kommunikationsmedium überprüft und bei Vorliegen derselben mit der Sendung der Nachricht aus dem FIFO-Speicher begonnen wird und hierauf der Zeitstempel erstellt und über den FIFO-Speicher in die Nachricht eingebettet wird.

3. Verfahren nach Anspruch 2, dadurch gekennzeichnet, daß die Nachrichtenlänge größer als die Speicherkapazität des FIFO-Speichers gewählt wird.

4. Verfahren nach einem der Ansprüche 1 bis 3, dadurch gekennzeichnet, daß der Zeitstempel im Bereich des Nachrichtenendes in die Nachricht eingebettet wird.

5. Knotenrechner zur Durchführung des Verfahrens nach einem der Ansprüche 1 bis 4, der eine Zentraleinheit, einen lokalen Taktgeber, eine Synchronisierungseinheit, eine Kommunikationseinheit und einen Speicher enthält, dadurch gekennzeichnet, daß die über eine DMA-Einheit (14) direkten Zugriff zum Speicher (5) besitzende Kommunikationseinheit (7) einen FIFO-Speicher (13) enthält, desses Speicherkapazität kleiner als die Nachrichtenlänge ist, wobei die Kommunikationseinheit nach Vorliegen eines Sendebefehls der Zentraleinheit zum Einlesen eines ersten Nachrichtenteiles in den FIFO-Speicher(13), zum darauffolgenden Überprüfen der Zugriffsberechtigung an das Kommunikationsmedium (1), nach Vorliegen derselben zum Auslesen des FIFO-Speichers (13) an das Kommunikationsmedium und zum weiteren Übertragen der Nachricht aus dem Speicher (3) in den FIFO-Speicher (13) sowie an einer vorbestimmten Stelle der Nachricht zum Einlesen eines in der Synchronisierungseinheit (8) erstellten Zeitstempels in den FIFO-Speicher (13) eingerichtet ist.

0247026